# EUROPÄISCHE PATENTANMELDUNG

(11) **EP 2 025 447 A1**
(43) Veröffentlichungstag der Anmeldung: **18.02.2009**
(21) Anmeldenummer: 08014176.5
(22) Anmeldetag: 08.08.2008
(51) Int. Cl.: B23Q 1/54

(54) **System zur Aufnahme von Bearbeitungsköpfen an einem Bearbeitungszentrum**

(30) Priorität: 14.08.2007 DE 102007038312
(71) Anmelder: DEPO GmbH & Co. KG, 33428 Marienfeld (DE)
(72) Erfinder: Deitert, Heinz, 33442 Herzebrock-Clarholz (DE)
(74) Vertreter: Elbertzhagen, Otto

(57) **Zusammenfassung**

Das System zur Aufnahme von Bearbeitungsköpfen an einem Bearbeitungszentrums weist zur Aufnahme der Bearbeitungsköpfe (8, 14, 18) einen verfahrbaren Schieberträger (2) auf, der an seiner vorderen Stirnseite (4) mit einem Aufnahmeraum (3) versehen ist. Zumindest einer der Bearbeitungsköpfe (14) benötigt eine selbstangetriebene Schwenkeinheit (17), die in der Betriebslage des Bearbeitungskopfes (14) im Aufnahmeraum (3) des Schieberträgers (2) angeordnet ist. Um die mechanischen Belastungen zu reduzieren, ist die vordere Seite des Schieberträgers (2) als Schnittstelle zur Fixierung der Bearbeitungsköpfe (8, 14, 18) ausgebildet und die Bearbeitungsköpfe (8, 14, 18) haben im Abstand vom Ende ihres rückwärtigen Abschnitts eine umfangsseitige Gegenschnittstelle (11) und mit ihren rückwärtigen Abschnitten (13) tauchen die Bearbeitungsköpfe (8, 14, 18) in den Aufnahmeraum des Schieberträgers (2) ein, wobei die erforderliche Schwenkeinheit (17) mit dem betreffenden Bearbeitungskopf fest verbunden ist.

## Beschreibung

Die Erfindung bezieht sich auf ein System zur Aufnahme von gegeneinander austauschbaren Bearbeitungsköpfen an einem nicht drehenden Schieberträger eines Bearbeitungszentrums gemäß den Merkmalen des Oberbegriffs des Patentanspruchs 1.

Bei den genannten Bearbeitungszentren handelt es sich vornehmlich um Fräsmaschinen, wobei die daran gegeneinander austauschbaren Bearbeitungsköpfe in erster Linie Fräsköpfe sind, mit deren drehenden Werkzeugen Zerspanungen an den zu bearbeitenden Werkstücken vorgenommen werden. Die überwiegende Zerspanungsarbeit wird hierbei mit Bearbeitungsköpfen vorgenommen, die als Motorspindeln ausgebildet sind, die mit Fräswerkzeugen für eine entsprechend grobe Zerspanung bestückt werden. Für die Feinbearbeitung werden Bearbeitungsköpfe eingesetzt, die in der Regel als Gabelköpfe ausgeführt sind. An den Gabelköpfen ist eine Motorspindel schwenkbar gelagert, deren Schwenkachse senkrecht zur Verfahrachse des Schieberträgers steht. Um beliebige, also auch unregelmäßig verlaufende räumliche Konturen bearbeiten zu können, ist ein solcher Gabelkopf koaxial zur Verfahrachse des Schieberträgers drehend oder schwenkend ausgeführt, und dazu ist eine selbst angetriebene Schwenkeinheit erforderlich.

Bei den bekannten Aufnahmesystemen der eingangs genannten Art ist die selbstangetriebene Schwenkeinheit des betreffenden Bearbeitungskopfes nicht nur in dessen Betriebslage im Aufnahmeraum des Schieberträgers angeordnet, sondern darin ständig fest installiert. An ihrer aus dem Hohlraum des Schieberträgers vorstehenden Stirnseite weist die Schwenkeinheit eine Schnittstelle auf, die sowohl zur Kupplung mit einem zu schwenkenden Bearbeitungskopf, wie dem Gabelkopf, dient als auch zur Fixierung der Motorspindeln mit den Schruppwerkzeugen vorgesehen ist, wenngleich für diese Motorspindeln der Dreh- oder Schwenkantrieb der selbstangetriebenen Schwenkeinheit nicht benötigt wird.

Die selbstangetriebene Schwenkeinheit weist ein feststehendes Lagergehäuse auf, welches im Aufnahmeraum des Schieberträgers angeordnet ist. Dadurch ergeben sich vor allem bei der Aufnahme von leistungsstarken, langen Motorspindeln an der Schnittstelle der Schwenkeinheit in zweifacher Hinsicht ungünstige Verhältnisse. Zum einen ergibt sich eine erhebliche Ausladungslänge einer als einseitig eingespannter Hebelarm anzusehenden Motorspindel einschließlich ihrem Bearbeitungswerkzeug am Schieberträger und zum anderen haben die Lagerungen der drehenden Teile der Schwenkeinheit einen relativ geringen Durchmesser, der in jedem Falle geringer als der Innendurchmesser der Wandungen des Schieberträgers im Bereich dessen Aufnahmeraums ist. Aufgrund der Hebelverhältnisse muß der Schieberträger infolge des Werkzeugdrucks große Kräfte aufnehmen, welche die Belastbarkeit des Aufnahmesystems begrenzen.

Der Erfindung liegt die Aufgabe zugrunde, ein Bearbeitungskopf-Wechselsystem der eingangs genannten Art zu schaffen, bei dem bei vergleichbarer Baugröße die mechanischen Belastungen der Maschine insbesondere am Schieberträger und an den Bearbeitungsköpfen reduziert sind.

Diese Aufgabe wird mit der Gesamtheit der Merkmale des Patentanspruchs 1 gelöst.

Der Erfindung liegt damit das Prinzip zugrunde, durch Reduzierung der Ausladungslänge des einseitig eingespannten Hebelarms, der durch den Schieberträger einschließlich dem jeweiligen Bearbeitungskopf gebildet wird, die an der Einspannstelle aufzunehmende Kraft, die Fräskraft, vergrößern zu können und/oder die Maschine leichter und damit preiswerter bauen zu können. Die an die Stirnseite des Schieberträgers verlegte Schnittstelle ermöglicht es, die Spann- und Justierglieder zur Fixierung der Bearbeitungsköpfe mit größtmöglichem Abstand voneinander anzuordnen, was die auf den Schieberträger einwirkenden Biegekräfte verringert. Des weiteren ist durch die Verlagerung der Gegenschnittstellen an den Bearbeitungsköpfen in Richtung zur Zerspanungsstelle an den jeweiligen Werkzeugen hin ein kürzerer Hebel realisiert, unter dem die vom Werkzeugdruck aufgebrachte Kraft senkrecht zur Verfahrachse des Schieberträgers über den Bearbeitungskopf auf den Schieberträger einwirkt. Auch dies verringert die mechanischen Belastungen an den Bearbeitungsköpfen und am Schieberträger.

Vorteilhafte Ausgestaltungsmerkmale der Erfindung ergeben sich aus den Unteransprüchen.

Die Erfindung wird nachfolgend anhand der Zeichnung noch näher erläutert. In der Zeichnung zeigen:
- Fig. 1: in schematischer Ansicht einen Schieber- träger einer Fräsmaschine mit zwei daran aufnehmbaren Bearbeitungsköpfen und
- Fig. 2: eine detailliertere Ansicht des Schie- berträgers nach Fig. 1 mit einer weite ren Ausführung eines daran aufnehmbaren Bearbeitungskopfes.

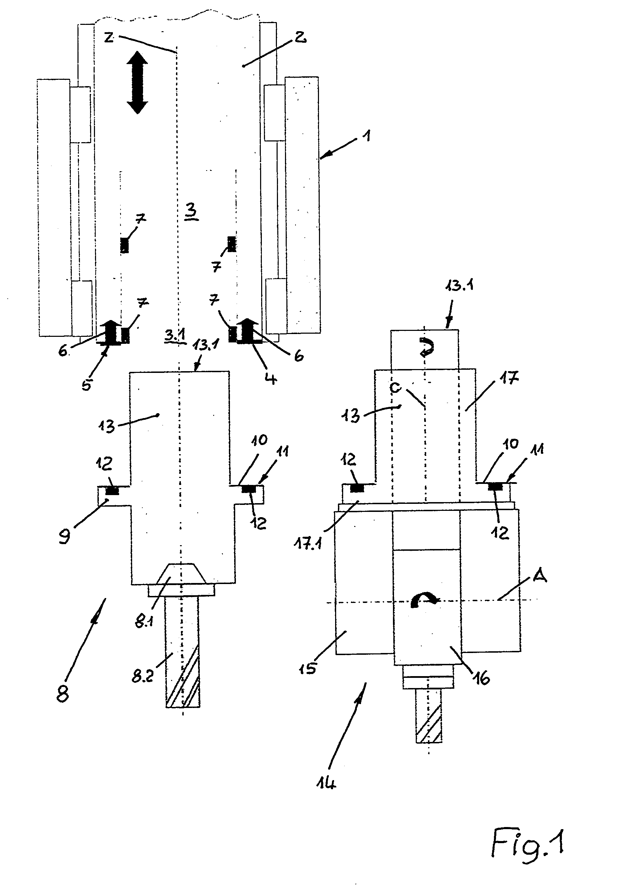

Im einzelnen erkennt man in Fig. 1 ein Führungsgestell 1 einer Fräsmaschine, in welchem ein Schieberträger 2 in Richtung einer der Maschinenachse, der Z-Achse, verfahrbar gelagert ist. In seinen Führungen ist der Schieberträger 2 drehfest gehalten. In dem dargestellten, aufnahmeseitigen Endbereich ist der Schieberträger 2 mit einem sich koaxial erstreckenden Hohlraum 3 versehen, der am Stirnende des Schieberträgers 2 offen ist und hier eine entsprechende Mündung 3.1 aufweist. Die Mündung 3.1 wird von einer vorderen Stirnseite 4 des Schieberträgers 2 umgeben, die eine mechanische Schnittstelle 5 definiert und an der mit Abstand voneinander diametral einander gegenüberliegend Spannvorrichtungen 6 angeordnet sind. An den Wandungen des Hohlraums 3 im Schieberträger 2 können Stützelemente 7 angebracht sein.

Der Schieberträger 2 dient zur Aufnahme eines Bearbeitungskopfes 8 in beispielhafter erster Ausführung, bei dem es sich um eine Motorspindel vornehmlich für schwere Fräsarbeiten handelt. Ein derartiger Bearbeitungskopf 8 weist am einen Ende der Spindel seines elektrischen Antriebsmotors eine Werkzeugaufnahme 8.1 auf, in der ein Fräswerkzeug 8.2 gespannt werden kann. Entsprechend der Länge des Antriebsmotors ist die Motorspindel 8 als längliches Bauteil ausgeführt, wobei der von der Werkzeugaufnahme 8.1 abliegende Bereich zur Aufnahme der Motorspindel 8 am Schieberträger 2 ausgebildet ist. So weist die Motorspindel 8 einen rückwärtigen, aufnahmeseitigen Abschnitt 13 auf, der bei am Schieberträger 2 aufgenommener Position der Motorspindel 8 in den Hohlraum 3 eintaucht. Im Abstand vom aufnahmeseitigen Ende 13.1 des rückwärtigen Abschnitts 13 der Motorspindel 8 ist an deren Umfang ein darüber nach außen vorstehender Kragen 9 angeordnet, der einen Absatz 10 zum aufnahmeseitigen Abschnitt 13 der Motorspindel 8 bildet. Dieser Absatz 10 ist als mechanische Gegenschnittstelle 11 ausgebildet, die mit der stirnseitigen Schnittstelle 5 am Schieberträger 2 harmoniert und an der mit den Spannvorrichtungen 6 des Schieberträgers 2 zusammenwirkende Gegenspannvorrichtungen 12 angeordnet sind. Demgemäß kommen bei am Schieberträger 2 aufgenommener Motorspindel 8 die Schnittstelle 5 am Schieberträger und die Gegenschnittstelle 11 an der Motorspindel 8 in Anlage aneinander, und es wird die Motorspindel 8 über die Spannvorrichtungen 6, 12 am Schieberträger 2 fixiert.

Fig. 1 zeigt einen weiteren Bearbeitungskopf 14, der in gleicher Weise an dem Schieberträger 2 aufgenommen werden kann. Der Bearbeitungskopf 14 weist einen Gabelkopf 15 auf, an dem eine Motorspindel 16 schwenkbar gelagert ist, wobei die Schwenkachse A bezogen auf die am Schieberträger 2 aufgenommene Position des Bearbeitungskopfes 14 senkrecht zur Verfahrachse Z des Schieberträgers 2 steht. Ferner weist der Bearbeitungskopf 14 eine integrierte Schwenkeinheit 17 auf, an welcher der Gabelkopf 15 um eine Achse C drehbar bzw. schwenkbar gelagert ist, die in der am Schieberträger 2 aufgenommenen Position des Bearbeitungskopfes 14 mit der Z-Achse zusammenfällt.

Der Bearbeitungskopf 14 weist in gleicher Weise wie der Bearbeitungskopf 18 einen aufnahmeseitigen Abschnitt 13 auf, und dieser Abschnitt 13 wird von der Schwenkeinheit 17 gebildet. Ebenso ist die Schwenkeinheit 17 mit einem Absatz 10 versehen, welcher dem aufnahmeseitigen Ende 13.1 des Abschnittes 13 zugekehrt ist und der die Gegenschnittstelle 11 bildet, an dem die Gegenspannvorrichtungen 12 angeordnet sind. Der Absatz 10 befindet sich an einem endseitigen, über den Umfang der Schwenkeinheit 17 vorstehenden Flansch 17.1, der benachbart dem Gabelkopf 15 angeordnet ist. In an dem Schieberträger 2 aufgenommener Lage taucht mit Ausnahme des Flansches 17.1 die Schwenkeinheit 17 in den stirnseitig offenen Hohlraum 3 des Schieberträgers 2 ein, womit der Gabelkopf 15 des Bearbeitungskopfes 14 so nahe wie möglich am Schieberträger 2 angeordnet ist. Die Gegenspannvorrichtungen 12 an der Gegenschnittstelle 11 des Bearbeitungskopfes 14 sind die gleichen wie die am Bearbeitungskopf 8. Die Überleitung der Kräfte erfolgt bei beiden Bearbeitungsköpfen 8, 14 über die Schnittstelle 5 am Schieberträger 2, wobei die Stützglieder 7 im Hohlraum 3 des Schieberträgers 2 als Stütze zur zusätzlichen Momentenaufnahme des der Fräskopflänge entsprechenden Hebels fungieren.

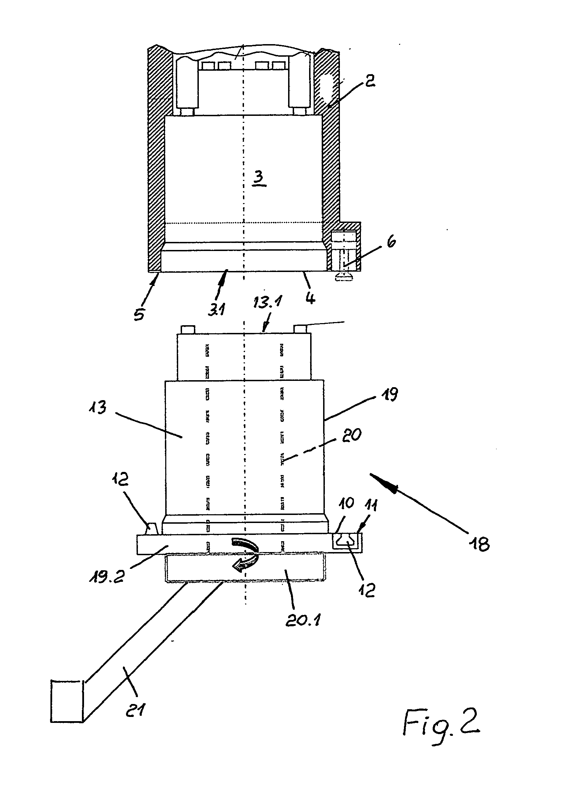

Fig. 2 zeigt eine weitere Variante anhand eines Bearbeitungs-kopfes 18, der in gleicher Weise wie die Bearbeitungsköpfe 8, 14 am Schieberträger 2 aufgenommen werden kann. Der Bearbeitungskopf 18 besteht aus einer Motorspindel 19 oder ähnlichen Antriebsvorrichtungen mit einem Elektromotor, wobei an der entsprechenden Arbeitsspindel 20 eine Werkzeugaufnahme 21 angeordnet ist. An dieser Werkzeugaufnahme wird nicht ein um seine eigene Achse rotierendes Fräswerkzeug aufgenommen sondern ein Drehwerkzeug 21, welches eine Umlaufdrehbewegung ausführt. Hierbei bildet auf nahezu ihrer gesamten Länge die Motorspindel 19 den aufnahmeseitigen Abschnitt 13 des Bearbeitungskopfes 18, der bei Aufnahme am Schieberträger 2 in dessen Hohlraum 3 eintaucht. Der Absatz 10 mit der zweiten Gegenschnittstelle 11 und den Gegenspannvorrichtungen 12 ist deshalb bei dieser Ausführung ebenfalls an einem radial vorstehenden Flansch 19.2 der Motorspindel 19 angeordnet, wobei sich dieser Flansch 19.2 benachbart der Werkzeugaufnahme 20.1 befindet.

## Patentansprüche

1. System zur Aufnahme von gegeneinander austauschbaren Bearbeitungsköpfen (8, 14, 18) an einem nicht drehenden Schieberträger (2) eines Bearbeitungszentrums, der in Richtung einer der Maschinenachsen, der Z-Achse, verfahrbar ist und der einen von seiner vorderen Stirnseite (4) sich in axialer Richtung nach hinten hin erstreckenden Aufnahmeraum (3) aufweist, wobei die Bearbeitungsköpfe (8, 14, 18) mit drehenden Werkzeugen bestückbar sind und entsprechend eigene Drehantriebe aufweisen und wobei zumindest einer (14) der Bearbeitungsköpfe (8, 14, 18) eine zusätzliche, selbst angetriebene Schwenkeinheit (17) benötigt, die in seiner Betriebslage im Aufnahmeraum (3) des Schieberträgers (2) angeordnet ist,
**dadurch gekennzeichnet,**
**daß** die vordere Stirnseite (4) des Schieberträgers (2) als Schnittstelle (5) zur Fixierung der Bearbeitungsköpfe (8, 14, 18) ausgebildet ist und die Bearbeitungsköpfe (8, 14, 18) einen rückwärtigen Abschnitt (13) zum Eintauchen in den Aufnahmeraum (3) des Schieberträgers (2) sowie im Abstand vom Ende (13.1) ihres rückwärtigen Abschnitts (13) eine umfangseitige Gegenschnittstelle (11) zur Fixierung an der stirnseitigen Schnittstelle (5) des Schieberträgers (2) aufweisen, wobei mit dem betreffenden Bearbeitungskopf (14) die Schwenkeinheit (17) fest verbunden und daran am Umfang die Gegenschnitt stelle (11) zur Fixierung an der stirnseitigen Schnittstelle (5) des Schieberträgers (2) angeordnet ist.

2. System nach Anspruch 1,
**dadurch gekennzeichnet,**
**daß** sich die Gegenschnittstelle (11) an einem Absatz (10) am Umfang der rückwärtigen Abschnitte (13) der Bearbeitungsköpfe (8, 14, 18) befindet, wobei dieser Absatz (10) dem rückwärtigen Ende (13.1) dieser Endabschnitte (13) zugekehrt ist.

3. System nach Anspruch 2,
**dadurch gekennzeichnet,**
**daß** ein Teil (8, 18) der Bearbeitungsköpfe (8, 14, 18) als an den Schieberträger (2) ankuppelbare Motorspindeln (8) ausgebildet ist, wobei der Absatz (10) mit der Gegenschnittstelle (11) sich am Umfang der Motorspindeln (8, 18) befindet.

4. System nach Anspruch 3,
**dadurch gekennzeichnet,**
**daß** der Absatz (10) an den Motorspindeln (8, 18) an einem über deren Umfangsseite vorstehenden Kragen (9) ausgebildet ist.

5. System nach einem der Ansprüche 1 - 4,
**dadurch gekennzeichnet,**
**daß** der Bearbeitungskopf (14) mit der fest daran angeordneten Schwenkeinheit (17) einen Gabelkopf (15) mit einer daran um eine senkrecht zur Verfahrachse (Z) des Schieberträgers (2) stehende Achse (A) schwenkbare Motorspindel (16) aufweist, wobei die Schwenkeinheit zur Schwenkung des Gabelkopfes (15) eine in der Verfahrachse (Z) liegende Schwenkachse (C) aufweist.

6. System nach einem der Ansprüche 1 - 5,
**dadurch gekennzeichnet,**
**daß** die Bearbeitungsköpfe (8, 14, 18) eine Ausführung (18) umfassen, die aus einer Motorspindel (19) mit einem daran aufzunehmenden Drehwerkzeug (21) besteht.
